# EUROPÄISCHE PATENTSCHRIFT

(11) **EP 1 839 478 B1**
(45) Veröffentlichungstag und Bekanntmachung des Hinweises auf die Patenterteilung: **28.10.2009**
(21) Anmeldenummer: 07100492.3
(22) Anmeldetag: 12.01.2007
(51) Int. Cl.: A01D 41/127, A01F 12/16

(54) **Körperschallsensoreinheit**
Impact sound sensor unit
Unité de détection de vibrations corporelles

(30) Priorität: 30.03.2006 DE 102006015152
(43) Veröffentlichungstag der Anmeldung: 03.10.2007
(73) Patentinhaber: CLAAS Selbstfahrende Erntemaschinen GmbH, 33428 Harsewinkel (DE)
(72) Erfinder: Jeppe, Eckehard, 34289 Zierenberg (DE)

(56) Entgegenhaltungen:
- EP-A- 1 632 130
- EP-A1- 0 883 983
- EP-A1- 0 936 442
- US-B1- 6 601 372

## Beschreibung

Die Erfindung betrifft eine Körperschallsensoreinheit, insbesondere für eine Landmaschine, mit einem Signalwandler, welcher ein mechanisches Sensorsignal in ein elektrisches Sensorsignal umwandelt, und mit einer mit dem Signalwandler verbundenen Vorverarbeitungselektronik. Außerdem betrifft die Erfindung ein Verfahren zur Steuerung einer derartigen Körperschallsensoreinheit.

Korperschallsensoren, oft auch als "Klopfsensoren bezeichnet, werden von verschiedenen Herstellern angeboten. Sie werden in geeigneter Weise an einem Impulsaufnehmer, beispielsweise direkt an ein geeignetes Bauteil eines Arbeitsorgans, dessen Betriebszustand überwacht werden soll. so montiert, dass die bei einem bestimmten zu überwachenden Ereignis in dem betreffenden Bauteil auftretenden Körperschwingungen vom Sensor registriert werden kannen Hierzu nutzen die Sensoren ein Piezoelement, um die in der Regel hochfrequenten Körperschallschwingungen in ein elektrisches Signal umzusetzen Ein Hauptanwendungsgebiet solcher Klopfsensoren liegt im Kfz-Bereich, So werden die Sensoren beispielsweise fur eine Motorklopfregelung am Gehause des Motorblocks angebaut.

In der Landmaschinentechnik werden Körperschallsensoren ebenfalls an verschiedensten Positionen eingesetzt, um Schwingungen und Körperschall verschiedener Art zu erfassen. Beispielsweise werden bei Mähdreschern Körperschallsensoren eingesetzt, um den Erntegutdurchsatz und/oder Kornverluste zu messen. Hierzu wird in der EP 0 883 983 B1 ein Sensor der eingangs genannten Art beschrieben, der an einem Impulsaufnehmerblech montiert ist, welches so angeordnet ist dass die im Gutstrom vorhandenen Rest- bzw. Verlustkorner auf das Impulsaufnehmerblech fallen und dort Schwingungen erzeugen, die vom Signalwandler dann in ein elektrisches Sensorsignal umgewandelt werden Bei Feldhackslern werden beispielsweise solche Sensoren zum Erfassen von Klopfsignalen der Messer der Hackseltrommel an einer Gegenschneide verwendet, um auf diese Weise den Schneidenabstand zu kontrollieren, Ein solcher Einsatz wird beispielsweise in der DE 30 10 416 A1 beschrieben Weiterhin konnen Korperschallsensoren in Landmaschinen z. B. auch als Steindetektoren oder als Unwuchtmelder an rotierenden Arbeitsorganen eingesetzt werden.

Die Signale des Sensors mussen in einer Steuereinrichtung entsprechend ausgewertet werden, um ein bestimmtes Ereignis zu detektieren Bei den bisherigen Systemen muss die Steuereinrichtung dabei das vom Sensor kommende elektrische Signal mit einer speziellen, für den jeweiligen Einsatzzweck des Sensors konstruierten Eingangsbeschaltung einlesen und weiterverarbeiten Ebenso mussen die Sensoren je nach Einsatzzweck unterschiedlich ausgerustet sein. D h es gibt für jeden Einsatzzweck unterschiedliche Körperschallsensoreinheiten und Steuereinrichtungen. So werden beispielsweise bei einer Motorklopfregelung. bei der relativ große Sensorsignale erzeugt werden, die Sensorsignale über eine vom Sensor kommende Leitungsverbindung direkt von der Steuereinrichtung eingelesen und in geeigneter Weise von der speziellen Eingangsbeschaltung der Steuereinrichtung weiterverarbeitet. Bei einem Klopfsensor zur Verlustmessung in einem Mähdrescher treten dagegen am Sensor nur kleine Messspannungen auf. Aufgrund der unvermeidlichen Leitungsverluste vom Sensor zur Steuereinrichtung ist es daher erforderlich, die Signale zunachst am Sensor zu verstärken Die hierzu benötige Vorverarbeitungselektronik ist dabei direkt an das Sensorgehäuse gekoppelt. Bei einem Sensor, welcher als Verlustsensor eingesetzt werden soll, kann die Vorverarbeitungselektronik auch einen einstellbaren analogen Passfilter enthalten, der über eine Vorwahlschaltung auf verschiedene Emteguter eingestellt werden kann, wie dies in der EP 0 883 983 B1 beschrieben ist.

Der Nachteil der oben beschriebenen Korperschallsensoreinheiten bzw Sensorsysteme besteht darin dass sie relativ unflexibel hinsichtlich ihres Einsatzes sind So benotigen beispielsweise die Hersteller von Landmaschinen für die verschiedensten Einsatze, wie Verlustsensorik, Motorklopfuberwachung, Unwuchtmeldungen, Schneidenabstandsteuerungen etc., unterschiedlichste Sensoren und speziell beschaltete Steuereinrichtungen. Dies fuhrt nicht nur bei der Herstellung der Landmaschinen zu relativ hohen Lagerhaltungskosten. sondern stellt auch ein Problem beim Service dar, da die einzelnen Servicestationen immer eine ausreichende Anzahl der verschiedensten Sensortypen und Sensorsteuereinrichtungen auf Lager haben müssen, um bei einem Ausfall eines Sensorsystems dieses schnell reparieren zu konnen Hierbei ist zu berucksichtigen, dass ein Stillstand einer Maschine in der Erntezeit mit sehr hohen Kosten verbunden ist und solche Ausfallzeiten folglich so gering wie moglich zu halten sind.

Es ist daher eine Aufgabe der vorliegenden Erfindung, eine Korperschallsensoreinheit, eine Steuereinrichtung, ein Sensorsystem sowie ein entsprechendes Verfahren zur Steuerung einer Körperschallsensoreinheit zu schaffen, welche einen universellen Einsatz der Körperschallsensoreinheit bzw. der Steuereinrichtung für verschiedenste Messeinsätze erlauben.

Diese Aufgabe wird durch eine Korperschallsensoreinheit gemäß Patentanspruch 1 und ein Verfahren gemaß Patentanspruch 13 gelöst.

Eine erfindungsgemäße Korperschallsensoreinheit weist, wie eingangs beschrieben, einen Signalwandler. welcher ein mechanisches Sensorsignal in ein elektrisches Sensorsignal umwandelt, und eine mit dem Signalwandler verbundene Vorverarbeitungselektronik auf Diese ist bevorzugt sehr eng mit dem Signalwandler verbunden vorzugsweise in einem Gehause bzw in direkt aneinander gekoppelten Gehausen Erfindungsgemäß weist dabei die Vor verarbeitungselektronik eine programmierbare Funktionskomponente. einen Dateneingang zum Empfang von Konfigurationsdaten sowie eine Programmierschnittstelle auf, um die Funktionskomponente auf Basis der empfangenen Konfigurationsdaten zu konfigurieren Bei der Funktionskomponente kann es sich um verschiedenste Einrichtungen handeln Vorzugsweise handelt es sich um einen programmierbaren Digitalfilter Alternativ oder bevorzugt zusatzlich kann es sich auch um einen programmierbaren, einstellbaren Signalverstarker und/oder eine programmierbare Integratoreinrichtung handeln. Durch Übersendung der geeigneten Konfigurationsdaten an die Programmierschnittstelle konnen so beispielsweise bei einem Digitalfilter bestimmte Filtercharakteristika und Kennlinien eingestellt werden Ebenso können bei einem Verstärker oder bei einer Integratoreinrichtung bestimmte Kennlinien eingestellt werden

Auf Basis der Konfigurationsdaten können dann in der Vorauswerteelektronik die vom Signalwandler kommenden elektrischen Sensorsignale entsprechend den Vorgaben der Konfigurationsdaten hinsichtlich einer Signalfrequenz und/oder hinsichtlich eines charakteristischen Frequenzverlaufs und/oder hinsichtlich einer Signalamplitude ausgewertet werden Die erfindungsgemäße Korperschallsensoreinheit kann folglich mit Hilfe der Konfigurationsdaten jeweils genau an den Einsatzzweck angepasst werden, ohne dass hierzu bauliche Veranderungen erforderlich sind.

Eine erfindungsgemaße Steuereinrichtung fur eine solche Korperschallsensoreinheit benotigt eine Konfigurationseinrichtung zur Ermittlung von Konfigurationsdaten zur Konfiguration einer programmierbaren Funktionskomponente einer Vorverarbeitungselektronik der Körperschallsensoreinheit sowie einen Datenausgang, um die Konfigurationsdaten an die Körperschallsensoreinheit zu senden Mit Hilfe dieser Steuereinrichtung kann eine erfindungsgemäße Kärperschallsensoreinheit je nach Einsatzzweck konfiguriert bzw, bei einer Änderung des Einsatzzweckes auch umkonfiguriert werden

Bevorzugt weist die Steuereinrichtung auch einen Signaleingang zum Empfang der von der Korperschalisensoreinheit vorverarbeiteten Sensorsignale eine Auswerteeinnchtung zur Auswertung von empfangenen Sensorsignalen und einen Signalausgang zum Aussenden eines Steuer- und/oder lnformationssignals in Abhangigkeit von einem ausgesendeten Sensorsignal auf. In diesem Fall kann die Konfiguration der Sensoreinheit mit der Steuereinrichtung erfolgen, die auch zur Auswertung der Steuersignale dient Es wird aber darauf hingewiesen, dass es grundsätzlich nicht erforderlich ist, dass die KörperschaUsensoreinheit über dieselbe Steuereinrichtung konfiguriert wird, weiche auch zur Auswertung der Sensorsignale genutzt wird, So kann es durchaus sein, dass eine Steuereinrichtung innerhalb der Landmaschine nur die Auswertung der Sensorsignale durchführt und eine Programmierung der erfindungsgemäßen Körperschallsensoreinheit beispielsweise bei einer Montage der Sensoreinheit im Werk oder in einer Servicestation mit einer externen, speziell zu diesem Zweck angeschlossenen Steuereinrichtung in Form eines mobilen Programmiergerats erfolgt

Ein erfindungsgemaßes Sensorsystem sollte zumindest eine Steuereinrichtung und zumindest eine zugehörige Korperschallsensoreinheit aufweisen. Bevorzugt kann aber eine Steuereinheit gleichzeitig mehrere Korperschallsensoreinheiten bedienen

Bei einem erfindungsgemäßen Verfahren zur Steuerung einer Korperschallsensoreinheit, insbesondere für eine Landmaschine, ist also mittels einer Softwareansteuerung eine Sensiercharakteristik der Korperschallsensoreinheit fur verschiedene sensorische Einsätze änderbar.

Hierzu kann vorzugsweise entsprechend den obigen Ausführungen eine programmierbare Funktionskomponente der Vorverarbeitungselektronik mittels an die Vorveraibeitungselektronik gesandter Konfigurationsdaten konfiguriert werden, d. h es werden je nach Aufbau der Körperschallsensoreinheiten z B. bestimmte Filtercharakteristika und Kennlinien eingestellt, um die Körperschallsensoreinheiten an den gewunschten Einsatzzweck anzupassen

Der Einsatz der erfindungsgemäßen, programmierbaren, universell einsetzbaren Korperschallsensoreinheit sorgt dafür, dass die Lagerhaltungskosten erheblich reduziert werden und dass der logistische Aufwand für die Sicherstellung dass an den Servicestellen immer ausreichend Sensoren zur Verfügung stehen, um bei einem plotzlichen Ausfall eines Sensorsystems dieses wieder funktionsfähig zu machen, verringert werden kann.

Die weiteren Unteransprüche und die nachfolgende Beschreibung enthalten jeweils besonders vorteilhafte Ausgestattungen und Weiterbildungen der Erfindung

Gemäß der Erfindung kann die Sensiercharaktenstik einer erfindungsgemäßen Körperschallsensoreinheit an die verschiedensten sensorischen Einsatze softwaregesteuert angepasst werden, z. B durch Übersendung geeigneter Konfigurationsdaten Im Bereich der Landmaschinen sind besonders folgende mögliche Einsatze interessant.
- ein Einsatz als Kornverlustsensor, um die Kornverluste zu messen,
- ein Einsatz als Vibrationssensor zur Überwachung eines Lagerspiels und/oder eines Abstands zwischen relativ zueinander beweglichen Bauteilen, z B. zur Kontrolle der Gegenschneidenverstellung an einem Feldhäcksler,
- ein Einsatz als Unwuchtmelder, um zum Beispiel den Rundlauf einer Dreschtrommel zu uberwachen und Beschädigungen frühzeitig zu erkennen,
- als Fremdkorperdetektor, um in den Erntegut eingebettete Fremdkorper, insbesondere Steine, zu erkennen

Je nach Einsatzzweck muss dafür gesorgt werden, dass der Signalwandler mechanisch in geeigneter Weise mit einem Bauteil des zu überwachenden Arbeitsorgans oder mit einem speziellen Impulsaufnehmer gekoppelt wird. Bei einem bevorzugten Einsatz als Verlustsensor wird der Signalwandler mechanisch an einen Impulsaufnehmer, beispielsweise ein Prallblech oder einen Metallstab gekoppelt, so dass die bei einem Auftreffen der Erntegutkorner in dem Impulsaufnehmer erzeugten Schwingungen vom Signalwandler in elektrische Sensorsignale umgewandelt werden. In ahnlicher Form kann die Korperschallsensoreinheit auch ausgebildet werden, um das Auftreten von Steinen im Ernteguteinzug zu detektieren.

Insbesondere, wenn die Steuereinrichtung zur Auswertung der Sensorsignale auch dazu dient, um die Körperschallsensoreinheit zu programmieren ist der Dateneingang der Korperschallsensoreinheit vorzugsweise so ausgebildet dass er die Konfigurationsdaten uber eine Signalleitung zum Aussenden der vorverarbeiteten elektrischen Sensorsignale empfangt Dementsprechend sollte bei der Steuereinrichtung der Datenausgang so ausgebildet sein, dass er die Konfigurationsdaten über eine an den Signaleingang angeschlossene Signalleitung zum Empfang der vorverarbeiteten elektrischen Sensorsignale versendet. Aufwändige Kabelverbindungen konnen so vereinfacht werden; ein einziges Signal- und Datenkabel zwischen den jeweiligen Körperschallsensoreinheiten und der Steuereinrichtung reicht aus.

Um die Programmierung der Korperschallsensoreinheit zu vereinfachen, umfassen vorzugsweise die Steuereinrichtung und/oder die Vorverarbeitungselektronik der Körperschallsensoreinheit eine Speichereinrichtung, in der eine Anzahl von Konfigurationsdatensatzen für eine Konfiguration der Funktionskomponenten hinterlegt sind Dabei muss diese Speichereinrichtung nicht unmittelbar innerhalb der Steuereinrichtung bzw. der Vorverarbeitungselektronik angeordnet sein, sondern es reicht aus, wenn die Steuereinrichtung bzw die Vorverarbeitungselektronik entsprechenden Zugriff auf diese Speichereinrichtung hat.

Diese Konfigurationsdatensatze können beispielsweise spezifische austauschbare Kennlinien für einen Filter und/oder Verstarker und/oder Integrator der Vorverarbeitungselektronik enthalten Dabei sind die Konfigurationsdatensatze bevorzugt verschiedenen sensorischen Einsatzen der Körperschallsensoreinheiten zugeordnet, d. h, es gibt spezielle Konfigurationsdatensätze fur den Anwendungsfall als Kornverlustsensor, fur eine Lagerspiel, uberwachung in einem rotierenden Arbeitsorgan, für einen Unwuchtsensor. einen Steindetektor oder einen Positionssensor fur verstellbare Baugruppen etc

Bei einem besonders bevorzugten Ausfuhrungsbeispiel sind die Korperschallsensoreinheiten so aufgebaut, dass sie nicht nur mechanische Impulse erfassen und in elektrische Signal umwandeln, sondern auch gesteuert mechanische Signale erzeugen können So ist allgemein bekannt, dass Piezoelemente nicht nur dazu genutzt werden können, um mechanische Schwingungen in Spannungsänderungen umzusetzen, sondern ein Piezoelement auch umgekehrt durch Anlegen von Spannungen in mechanische Schwingungen versetzt werden kann. Bei einem besonders bevorzugten Ausfuhrungsbeispiel weist daher die Körperschallsensoreinheit zusatzlich einen Signalgeber auf, um auf Basis empfangener Aktivierungssignale mittels des Signalwandlers aktiv mechanische Signale zu erzeugen. beispielsweise, indem der Signalgeber elektrische Spannungspulse an den Signalwandler anlegt.

Bei einem solchen Aufbau der Körperschallsensoreinheiten kann in Konstruktionen, in denen mehrere Korperschallsensoreinheiten über ein schwingungsfahiges Bauteil miteinander verbunden sind, ein Test der Körperschallsensoreinheiten bzw des Sensorsystems durchgeführt werden Ein typischer Fall ist die Verwendung mehrerer Korperschalisensoreinherten an einem Impulsaufnehmerblech.

Bei einer besonders bevorzugten Weiterbildung des erfindungsgemäßen Verfahrens wird dann an eine erste der Körperschalisensoreinheiten ein Testsignal gesendet, auf Basis dessen vom Signalwandler der ersten Körperschallserlsoreinheit mechanische Signale erzeugt werden Diese mechanischen Signale werden dann von einer zweiten der Körperschallsensoretnheften erfasst und in elektrische Sensorsignale umgewandelt Die elektrischen Signale werden wiederum vorverarbeitet, und geprüft und es werden auf Basis eines Prufungsergebnisses dann die Konfigurationsdaten, beispielsweise für die zweite Körperschallsensoreinheit. ermittelt Auch dies ist wieder mit einer Steuereinrichtung in Form eines externen Prüf- und/oder Programmiermoduls möglich welches ein Werk oder in einer Servicewerkstatt an die Sensoreinheiten angeschlossen wird, Das Verfahren kann aber auch mit Hilfe der Steuereinrichtung durchgeführt werden, welche ohnehin zur Auswertung der Steuersignale dient,

Eine Steuereinrichtung weist hierzu vorzugsweise eine Kalibriemngseinrichtung mit einer Tesisignaigenenerungseinheit zur Erzeugung von Tesistgrialen fur eine erste Körperschallsensoreinheit und eine Testsignaiauswerteeinheit auf, um ein von einer zweiten Korperschallsensareinheit in Reaktion auf ein ausgesendetes Testsignal empfangenes Sensorsignal zu prufen und auf Basis eines Prüfungsergebnisses dann die Konfigurationsdaten zu ermitteln.

Die Testsignale konnen dabei mit verschiedenen Frequenzen gesendet werden bzw. es konnen mit dem Testsignal ganze Frequenzbereiche durchfahren werden Somit kann eine komplette Sensorkalibrierung hinsichtlich der Verstarkungsfaktoren und hinsichtlich des Frequenzgangs durchgeführt werden. Die Anbringung zusätzlicher Elemente, welche für einen Test Klopfsignale erzeugen, ist dann nicht mehr notwendig. Dies ist insbesondere deshalb vorteilhaft, weil in vielen Fällen aus Grunden der Funktionssicherheit ohnehin mehrere Sensoren an einem Impulsaufnehmer eingesetzt werden, Bevorzugt sind sämtliche verwendeten Körperschallsensoreinheiten mit entsprechenden Signalgebern ausgebildet, so dass jede der Körperschallsensoreinheiten getestet werden kann, indem eine andere Korperschallsensoreinheit das Testsignal liefert.

Die Erfindung wird im Folgenden noch einmal unter Hinweis auf die beigefugten Zeichnungen anhand von Ausfuhrungsbeispielen naher erläutert Es zeigen
Figur 1 einen schematischen Querschnitt durch einen Mähdrescher.
Figur 2 einen schematischen Querschnitt durch einen Feldhäcksler mit vergrößerter Darstellung der Hackseltrommel,
Figur 3 eine schematische Darstellung zweier an eine Steuereinrichtung angeschlossener Körperschallsensoreinheiten gemäß einem Ausführungsbeispiel der Erfindung.
Figur 4 eine Darstellung eines typischen Sensorsignals bei einem Einsatz der Korperschallsensoreinheit zur Durchsatzkontrolle,
Figur 5 eine Darstellung eines typischen Sensorsignals bei einem Einsatz der Körperschallsensoreinheit als Klopfsensor an der Gegenschneide eines Feldhackslers,
Figur 6 eine Darstellung eines typischen Sensorsignals bei einem Einsatz der Korperschallsensoreinheit zur Lager- bzw. Wellenuberwachung an einem rotierenden Arbeitsorgan.

Im Folgenden wird gezeigt, wie die Erfindung innerhalb von Landmaschinen insbesondere Erntemaschinen Wie Mähdreschern oder Feldhackslern, eingesetzt werden kann. Dies schließt aber nicht aus, dass die erfindungsgemaßen Körperschallsensoreinheiten, Steuereinrichtungen und Sensorsysterne nicht auch in anderen Maschinen oder Geräten, beispielsweise in Kfzs, eingesetzt werden können. Auch dort besteht in der Regel ein Bedarf an universell einsetzbaren Körperschallsensoreinheiten, damit verschiedene Messungen mit hardwaremaßig in gleicher Weise aufgebauten Korperschallsensoreinheiten durchgefuhrt werden, um so Lagerhaltungskosten einzusparen und Reparaturzeiten zu verkurzen,

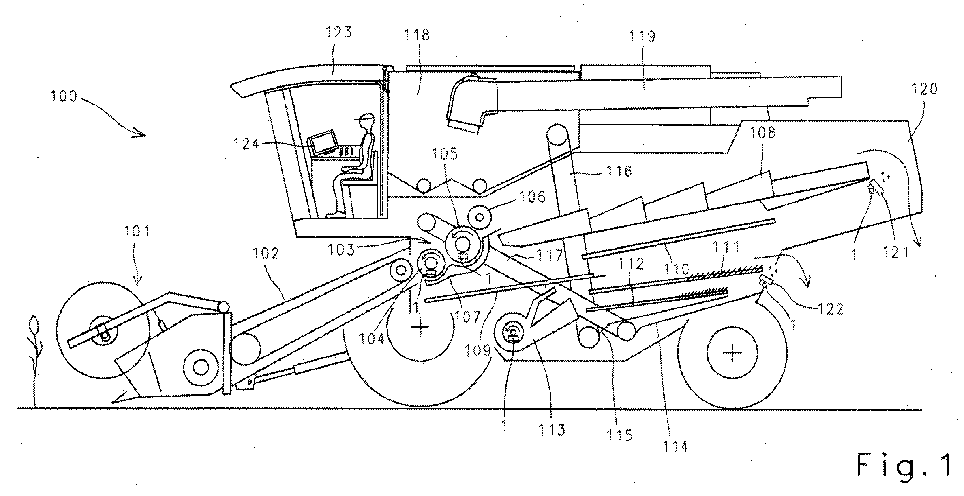

Bei dem in Figur 1 gezeigten Ausfuhrungsbeispiel der Erfindung handelt es sich um einen selbstfahrenden Mähdrescher 100 mit einem so genannten Querflussdreschwerk 103 und einem dahinter angeordneten Schüttler 108 als Abscheideeinrichtung. Unterhalb des Schuttlers 108 befindet sich eine Reinigungseinrichtung, bestehend aus mehreren übereinander angeordneten Sieben 111, 112 und einem Gebläse 113

Die Arbeitsweise eines solchen Mähdreschers 100 wird nachfolgend beschrieben:

Das Erntegut wird zunächst mittels einer Haspel des Mähtisches auf die Maheinrichtung 101 gelegt und von Mahmessern abgeschnitten. Das Erntegut wird dann uber eine Einzugsechnecke und einen Schrägforderer in einem Einzugskanal 102 zu einem Eingang des Dreschwerks 103 transportiert. Am Eingang des Dreschwerks 103 befinden sich eine Einlege bzw Vorbeschleunigertrommel 104 und dahinter in Gutflussrichtung eine Dreschtrommel 105 Unterhalb der Dreschtrommel 105 befindet sich ein passend geformter Dreschkorb 107 Das aus dem Einzugskanal 102 kommende Erntegut wird durch die Vorbeschleunigertrommel 104 erfasst und dann weiter von der Dreschtrommel 105 durch den zwischen der Dreschtrommel 105 und dem Dreschkorb 107 befindlichen Dreschspalt gezogen. Dabei wird durch die Dreschleisten der Dreschtrommel 105 das Erntegut gedroschen, wobei ein Korn-Spreu-Gemisch durch den Dreschkorb 107 nach unten fallt, welches dann uber einen Zufuhrboden 109 der Reinigungseinrichtung zugeführt wird, um die Korner von den Beimengungen zu trennen.

Vom Dreschwerk 103 wird der gedroschene Gutstrom über die Wendetrommel 106 auf den Hordenschuttler 108 gelenkt, durch den die noch im Gutstrom befindlichen Körner sowie evtl Kurzstroh und Spreu abgetrennt werden Die Körner, das Kurzstroh und die Spreu gelangen dann uber einen weiteren Zufuhrboden 110 ebenfalls in die Reinigungseinrichtung,

Die Reinigung der Korner von den Nicht-Korn-Bestandteilen in der Reinigungseinrichtung erfolgt in der Weise, dass durch die Sieböffnungen (Löcher. Maschen, Schlitze) in den schwingend angetriebenen Sieben 111, 112 mittels des Gebläses 113 Wind hindurchgeblasen wird, welcher das uber die Siebe 111, 112 geführte Erntegut auflockert und für das Heraustrennen der spezifisch leichteren Spreu- und Kurzstrohanteile sorgt. wahrend die schweren Erntegutkorner durch die Sieböffnungen fallen. Hierbei sind ein Obersieb 111 und ein Untersieb 112 bereichsweise ubereinander angeordnet. so dass das Erntegut in verschiedenen Stufen unterschiedlich fein gesiebt wird

Die Körner, welche durch beide Siebe 111, 112 der Reinigungseinrichtung gelangt sind, fallen auf einen ersten Auffang und Führungsboden 115 und werden einer Kornförderschnecke zugefuhrt. Sie werden dann von einem Elevator 116 in einen Korntank 118 des Mähdreschers 100 befördert und können dort bei Bedart mit einem Tankentleerförderer 119 auf einen Transportwagen umgeladen werden.

Die Teilchen, die in der Reinigungsvorrichtung erst am hinteren Ende durch die Sieböffnungen des Obersiebs 111 fallen, sind in der Regel schwerere Teilchen, d h Teilchen, welche ein Korn enthalten das sich nicht volistandig von anderen Bestandteilen des Getreides gelöst hat Diese Teilchen fallen hinteren dem Untersieb 112 auf einen zweiten Auffang- und Fuhrungsboden 114. welcher unterhalb und etwas hinter dem ersten Auffang- und Fuhrungsboden 115 angeordnet ist, und werden als so genannte Überkehr über einen Uberkehrelevator 117 noch einmal zum Dreschwerk 103 zurückgeführt

Bestandteile, die nicht durch das Obersieb 111 fallen, werden als Verlust ausgeworfen Ebenso wandern das Stroh sowie ein bestimmter Prozentsatz an Verlustkornern über den Hordenschuttler 108 zum hinteren Ende 120 des Mähdreschers 100 und werden dort ausgeworfen.

Um jeweils die Verluste hinter dem Obersieb 111 und hinter dem Hordenschuttler 108 zu messen, sind unmittelbar hinter diesen Bauteilen 111, 108 Impulsaufnehmer 121, 122 in Form von Prallblechen oder Staben angeordnet, auf welche die herausfallenden Kornbestandteile auftreffen und dort einen mechanischen Impuls vetursachen, der den Impulsaufnehmer 121, 122 in Schwingungen versetzt An den Impulsaufnehmern 121. 122 sind jeweils erfindungsgemäße Korperschallsensoreinheiten 1 angeordnet Ebenso befinden sich an der Maschine 100 an den verschiedenen rotierenden Organen, beispielsweise an der Einlegetrommel 104 und der Dreschtrommel 105 sowie am Gebläse 113. erfindungsgemäße Korperschallsensorelohelten 1, um diese Arbeitsaggregate 104, 105, 113 zu überwachen.

Diese Körperschallsensoi-einheiten 1 sind jeweils mit einer Steuereinrichtung (in Figur 1 nicht dargestellt) verbunden, die. wie noch später naher erlautert wird, die von den Kbrperschallsensoremhelten 1 kommenden Signale auswertet und entsprechende Steuer- und/oder Informationssignale an weitere Steuereinheiten zur Ansteuerung der einzelnen Arbeitsorgane oder an ein Bedienerterminal 124 in einer Fahrerkabine 123 weiterleitet, so dass in Abhängigkeit von diesen Steuer- und/oder Informationssignalen entsprechend automatisch oder durch einen Fahrer reagiert werden kann.

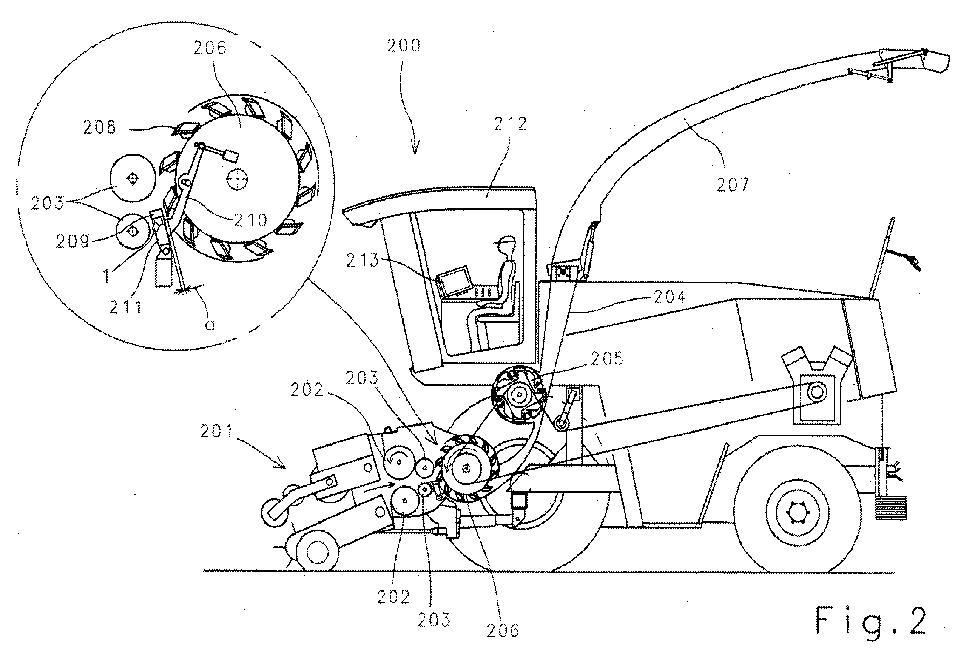

Bei dem in Figur 2 dargestellten Ausführungsbeispiel einer Erntemaschine handelt es sich um einen Feldhacksler 200 welcher mittels eines Pick-Up-Vorsatzgerates 201 Grasschwaden aufsammelt Das Gras wird im Feldhacksler 200 gehäckselt und durch einen Auswurfkrummer 207 an ein parallel fahrendes Transportfahrzeug (nicht dargestellt) ubergeladen Zur Durchfuhrung dieses Arbeitsprozesses weist der Feldhäcksler 200 eingangsseitig hinter dem Pick-Up-Vorsalzgerat 201 die üblichen Einzugwalzen 202 auf, weiche das Erntegut zu den Presswalzen 203 führen Hinter den Presswalzen 203 ist ein ortsfestes Messer 209 mit einer Schneide angeordnet Das ortsfeste Messer 209 erstreckt sich parallel zu der Drehachse einer Messertrommel (auch Hackseltrommel 206 genannt), welche auf ihrem Umfang verteilt Messer 208 besitzt Diese Messer 208 der Hackseltrommel 206 laufen nacheinander mit ihren Schneiden an der Schneide (Gegenschneide) des ortsfesten Messers 209 ab Hierdurch wird das Erntegut gehackselt und gleichzeitig nach oben weiter zu einer Nachbeschleunigertrommel 205 gefordert. Welche das Erntegut mit hoher Geschwindigkeit durch einen Auswurfschacht 204 und weiter durch den Auswurfkrümmer 207 schleudert Fur eine bestmögliche Aufbereitung des Ernteguts und zur Erzeugung von möglichst geringen Schnittkraften ist es erforderlich, dass der Abstand zwischen der Gegenschneide des ortsfesten Messers 209 und den Schneiden der rotierenden Messer 208 möglichst eng gehalten wird Vorzugsweise sollte der Schneidenabstand a im Bereich von 0,2 mm liegen, Da sich mit der Zeit die Schneiden der Messer zwangsläufig abnutzen, muss der Spalt a permanent nachgestellt werden. Hierzu ist das ortsfeste Messer 209 an einer Messerhalterung 211 gelenkig befestigt und über einen Verstellmechanismus 210 motorisch verschwenkbar. Bei der Verstellung muss jedoch darauf geachtet werden, dass das Messer 209 nicht so nah an die rotierende Häckseltrommel 206 geschwenkt wird, dass eines der auf der Hackseltrommel 206 angeordneten Messer 208 mit dem ortsfesten Messer 209 in Beruhrung kommt. Hierzu ist am ortsfesten Messer 209 eine erfindungsgemaße Korperschallsensoreinheit 1 angeordnet. Wird nun das ortsfeste Messer 209 zum Nachstellen des Messerspaltes a etwas zu weit gegen die Hackseltrommel 206 verschwenkt, so wird zuerst die Schneide des Messers 208 auf der Hackseltrommel 206, welches am weitesten radial nach außen hervorsteht, an der Schneide des ortsfesten Messers 209 anschlagen, Dies fuhrt zu einem Körperschwingungssignal innerhalb des ortsfesten Messers 209, welches sofort von der Korperschallsensoreinheit 1 registriert wird, so dass daraufhin das ortsfeste Messer 209 wieder ein Stück zurückgeschwenkt wird. Auf diese Weise kann eine Fehleinstellung sicher vermieden werden

Auch hier ist die Körperschalisensoreinheit 1 mit einer (in Figur 2 nicht dargestellten) Steuereinrichtung verbunden, welche das Signal auswertet und ein entsprechendes Informations- und Steuersignal an eine Steuerung fur die Einstellung des ortsfesten Messers 209 ubersendet bzw, ein solches "Warn"-Signal an ein Bedienerterminal 213 in einer Fahrerkabine 212 ausgibt. Mit Hilfe dieser Korperschallsensoreinheit 1 kann im Ubrigen auch registriert werden, wenn in die Häckseltrommel 206 ein Stein oder sonstiger harter Fremdkorper gerat. Es kann dann eine Notabschaltung durchgefuhrt und eine entsprechende Alarmmeldung an den Fahrer ausgegeben werden Ebenso ist es möglich entsprechende weitere Korperschalisensoreinheiten auch an den verschiedenen rotierenden Arbeitsorganen wie beispielsweise den Einzugtrommeln 202, den Presswalzen 203, der Nachbeschleunigertrommel 205 oder der Hackseltrommel 206 selbst anzuordnen, um Unwuchten dieser Organe zu erkennen,

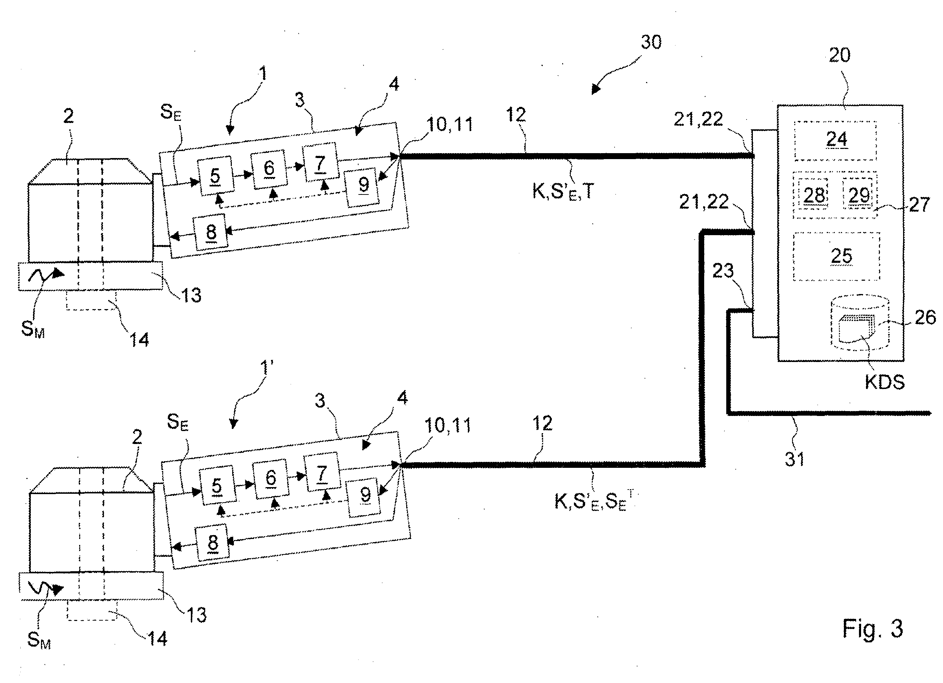

Ein möglicher Aufbau der erfindungsgemaßen Körperschahsensoreinheiten 1. 1' ist in Figur 3 detaillierter dargestellt. Figur 3 zeigt dabei ein Sensorsystem 30. bestehend aus zwei gleichartig aufgebauten Körperschaiisensorefnheiten 1, 1', und einer Steuereinrichtung 20, durch welche die von den Katperschallsensoreinheiten 1, 1' kommenden, vorverarbeiteten Sensorsignale S'_{E} ausgewertet werden und von der aus die Korperschallsensoreinheiten 1, 1' programmiert werden können.

Die Korperschallsensoreinheiten 1, 1' weisen jeweils einen Signalwandler 2 in Form eines Piezokristalls auf, der in bekannter Weise an einem Impulsaufnehmer 13, hier beispielsweise ein Impulsaufnehmerblech 13, zur Registnerung von durch auftreffende Körner erzeugten Klopfsignalen S_{M} montiert ist. Die Montage kann mit Hilfe einer Schraube 14 erfolgen. Der genaue mechanische Aufbau kann beispielsweise der EP 0 883 983 B1 entnommen werden

Unmittelbar an dem eigentlichen Signalwandler 2 befindet sich in einem am Signalwandler anmontierten Gehause 3 eine Vorverarbeitungselektronik 4. Die komplette Körperschallsensoreinheit 1, 1 mit Signalwandler 2 und Vorverarbeitungselektronik 4 kann zum Schutz gegen außere Einflüsse auch vergossen sein.

Die Vorverarbeitungselektronik 4 weist mehrere programmierbare Funktionskomponenten 5. 6, 7 auf. Eine erste Funktionskomponente ist ein einstellbarer Verstärker 5, um ein von dem Signalwandler 2 erzeugtes elektrisches Sensorsignal S_{E} zu verstärken Das verstärkte Signal wird dann an einen programmierbaren Digitalfilter 6 weitergeleitet, welcher je nach Einstellung als Bandpassfilter, als Tiefpass oder Hochpass eingeselzt werden kann Dahinter befindet sich ein einstellbarer Integrator 7, weicher ein ankommendes verstärktes und gefiltertes Signal aufintegneren kann, um so ein digitales Ausgangssignal S'_{E} zu erzeugen, Mit diesem Integrator 7 kann auch ein einstellbarer Schweilenwert gesetzt werden d h der Integrator 7 kann so auch als Vergleicher wirken Ein so vorverarbeiletes digitales Ausgangssignal S'_{E} wird dann über einen Signalausgang 10 uber eine Signalleitung 12 an die Steuereinrichtung 20 gesendet.

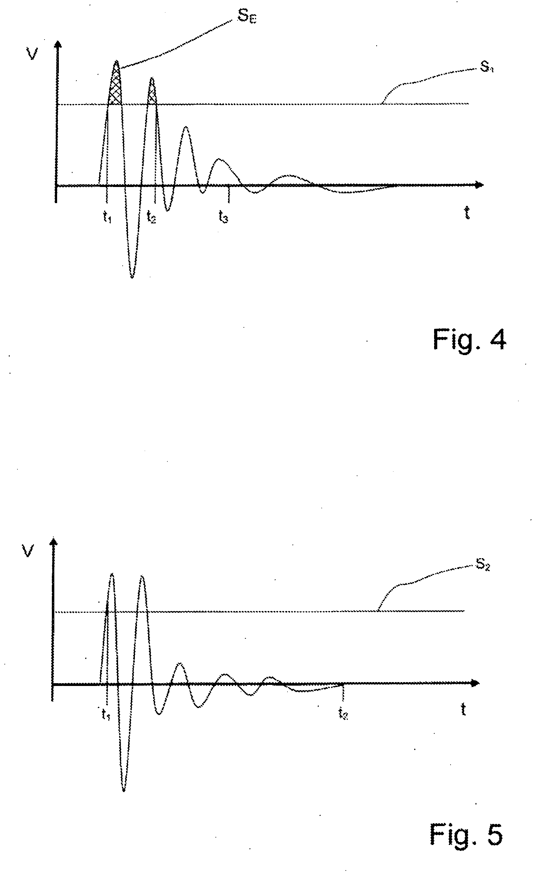

Sämtliche Funktionskomponenten 5, 6, 7 sind wie erläutert einstellbar bzw, programmierbar. Hierzu weist die Vorverarbeitungselektronik 4 eine an einem Dateneingang 11 angeschossene Programmierschnittstelle 9 auf. Uber diese Programmierschmttstelle 9 können in Abhangigkeit von uber den Dateneingang 11 empfangenen Konfigurationsdaten K der Verstarker 5. der Filter 6 und der Integrator 7 in der richtigen Weise eingestellt werden, so dass die Körperschallsensoreinheiten 1,1' entsprechend dem gewünschten Einsatzzweck als Klopfsensor, als Unwuchtmelder etc. arbeiten Typische Einstellungen werden nachfolgend noch anhand der Figuren 4 bis 6 erläutert. Die Programmierschnittstelle 9 kann dabei in unterschiedlicher Weise ausgestaltet sein. Es kann sich beispielsweise um eine senell arbeitende Schnittstelle, eine LIN-Schnittstelle oder Ähnliches handeln

In dem dargestellten Ausführungsbeispiel sind jeweils der Signalausgang 10 und der Dateneingang 11 in einem Ein-/Ausgang 10,11 realisiert. D. h. uber eine an diesen Ein-/Ausgang 10,11 angeschlossene Leitung 12 werden sowohl von der Korperschallsensoreinheit 1, 1' aus die Sensorsignale S'_{E} an die Steuereinheit 20 ubertragen als auch von der Steuereinrichtung 20 aus geeignete Konfigurationsdaten K an die Programmierschnittstellen 9 gesendet, um die Korperschallsensorenheiten 1, 1' in der gewünschten Weise zu konfigurieren

Außerdem weist die Vorverarbeitungselektronik 4 einen Signalgeber 8 auf, der bei Empfang eines Testsignals T, welches ebenfalls von der Steuereinrichtung 20 uber die Signalleitung 12 an die Körperschalisensoreirheit 1 ubersendet werden kann, entsprechende Spannungspulse an den Signalwandler 2 ausgibt, so dass mit diesem für Testzwecke ein mechanisches Klopfsignal Innerhalb des Impulsaufnehmers 13 erzeugt werden kann.

Bei dem in Figur 3 dargestellten, bevorzugten Ausführungsbeispiel weist die Steuereinrichtung 20 fur jede Steuereinheit 1, 1' einen Signaleingang 21 zum Empfang der vorverarbeiteten Sensorsignale S'_{E} und einen Datenausgang 22 auf, um Konfigurationsdaten K an die jeweilige Korperschallsensoreinheit 1, 1' zu senden Dabei sind die Signaleingänge 21 und die Datenausgange 22 jeweils wieder in einem gemeinsamen Ein-/Ausgang 21 22 kombiniert, an den die jeweilige Signalleitung 12 zu der betreffenden KorperschaUsensoreinheit 1,1' angeschlossen wird. Die Signalleitung 12 transportiert dabei im normalen Sensorbetrieb den Sensorwert, d h das Sensorsignal S'_{E}, beispielsweise als Spannungssignal oder auch als Frequenzsignal zur Steuereinrichtung 20. Das von den Korperschallsensoreinheiten jeweils ausgesendete Sensorsignal S'_{E} kann beispielsweise innerhalb von 0 bis 5 Volt liegen, wobei der untere bzw. obere Spannungsbereich als Diagnosebereich für Leitungsunterbrechungen oder zu Kurzschlussmessungen genutzt werden kann

In dem in Figur 3 dargestellten Ausfuhrungsbeispiel weist die Steuereinrichtung 20 nur zwei solcher kombinierten Ein-/Ausgänge 21, 22 auf Tatsächlich kann eine solche Steuereinrichtung 20 aber auch eine höhere Anzahl entsprechender Ein-/Ausgänge 21, 22 aufweisen, um eine Vielzahl von weiteren Korperschafisensoreinheiten anschließen zu können

Bestandteile der Steuereinrichtung 20 sind u a eine Auswerteeinrichtung 24. weiche ankommende Sensorsignale S'_{E} auswertet und in Abhängigkeit davon Steuer- und/oder Informationssignale an einen Signalausgang 23. beispielsweise uber einen Datenbus 31 ausgibt Dieser Datenbus 31 fuhrt beispielsweise zu anderen Modulen, die dazu dienen, die jeweiligen Arbeitsaggregate zu steuern, und/oder zu einem Anzeigesystem in der Fahrerkabine Als weitere Komponente enthält die Steuereinrichtung 20 eine Konfigurationseinrichtung 25, welche die Konfigurationsdaten K zur Konfiguration der einzelnen Körperschallsensoreinheiten 1, 1' ermittelt. Diese Konfigurationsdaten K werden dann an die einzelnen Körperschalisensoreinheiten 1, 1' bzw, deren Programmierschnittstellen 9 ubersandt

Bei dem in Figur 3 dargestellten bevorzugten Ausführungsbeispiel sind in einem Speicher 26 der Steuereinrichtung 20 fur verschiedene Einsatzzwecke unterschiedliche Konfigurationsdatensatze KDS hinterlegt. Um eine uni versal verwendbare, erfindungsgemaße Korperschallsensoreinheit 1, 1' für einen bestimmten Zweck zu nutzen, muss diese Körperschallsensoreinheit 1,1' dann nur noch an der passenden Stelle in der Maschine montiert und über ein Signalkabel 12 mit der Steuereinrichtung 20 verbunden werden Uber den Bus 31 kann dann die Steuereinrichtung 20 dazu veranlasst werden, einen fur den vorgesehenen Einsatzzweck geeigneten Konfigurationsdatensatz KDS an die betreffende Körperschallsensorelnheit 1, 1' zu versenden, um die Funktionskomponenten 5, 6, 7 der Korperschallsensoreinheit 1, 1' entsprechend dem Einsatzzweck zu konfigurieren.

Die vorbeschriebenen flexiblen Körperschallsensoreirlheiten konnen wie erläutert wahlweise als Sensor fur eine Verlustsensonk im Mahdrescher, als Sensor für die Einstellung der Gegenschneide in einem Feldhäcksler oder als Unwuchtmelder für diverse Aggregate, als Steinerkennungsdetektor eingesetzt werden Hierzu kann die Sensiercharakteristik der Körperschalleinheiten z B. hinsichtlich einer Signalfrequenz und/oder eines charakteristischen Frequenzverlaufs und/oder einer Signalamplitude verändert werden Im Folgenden werden typische Einstellbeispiele erläutert:

### 1 Einsatz der Korperschallsensoreinheiten zur Durchsatzkontrolle bzw als Verlustsensor,

Bei dieser Einstellung wird das Signal des Signalwandlers 2 zunächst durch den Verstärker 5 verstärkt und dann durch den digitalen Filter 6 gefiltert, der so konfiguriert wird, dass er als Hochpassfilter wirkt Dabei werden nur Signale mit Frequenzen über 2 kHz durchgelassen.

Das verbleibende Durchsatz-/Verlustsignal wird dann zu dem ausgehenden Sensorsignal S'_{E} verarbeitet, indem innerhalb der Integratoreinrichtung 7 alle Signalanteile oberhalb einer einstellbaren Schwelle über einen bestimmten Zeitraum aufintegriert werden Dies ist in Figur 4 dargestellt Gezeigt ist hier ein durch das Auftreten eines Korns auf den Impulsaufnehmer erzeugtes Schwingungssignal S_{E} (mit Nachschwingungen) als Spannungswert V über der Zeit t Aufintegriert werden alle oberhalb der Schwelle S hegenden Signalanteile innerhalb des Zeitraums t₁ bis t₃, wobei hier nur innerhalb des Zeitraums t₁ bis t₂ das Signal groß genug ist, damit die Spannungsamplitude V oberhalb des eingestellten Schwellenwerts S₁ liegt. Das heißt, es werden nur die schraffierten Signalanteile aufintegriert und zur weiteren Verarbeitung herangezogen Der Schwellenwert S₁ kann dabei auf die geerntete Fruchtart eingestellt werden. Zurzeit gibt es drei Schwellen, eine fur Mais (große Körner), eine fur Getreide (mittelgroße Körner) und eine fur Raps (kleine Korner). Diese Einstellung kann ebenfalls von der Steuereinrichtung 20 aus durch Ubersendung geeigneter Konfigurationsdaten K an die Programmierschmttstelle 9 der Vorverarbeitungselektronik 4 der Körperschallsensoreinheiten 1,1' erfolgen

Das Ergebnis, d. h. das von der Korperschallsensoreinheit 1, 1' ausgesendete vorverarbeitete Sensorsignal S'_{E}, kann dann über die Steuereinrichtung 20 an die Anzeigeeinheit in der Fahrerkabine übermittelt werden. Hierzu kann beispielsweise der dargestellte Datenbus 31 genutzt werden Alternativ kann auch eine analoge Spannungspegelauswertung durchgeführt werden In diesem Zusammenhang wird darauf hingewiesen, dass die Steuereinrichtung 20 im Rahmen ihrer Auswertung der von den Korperschallsensoreinheiten 1, 1' ubermittelten Sensorsignale S'_{E} diese Sensorsignale S_{'E} grundsätzlich auch unverändert an andere Einheiten weiterleiten kann wenn dies gewünscht ist

In dem vorbeschriebenen Beispiel wird folglich die in der Korperschallsensoreinheit 1, 1' befindliche Vorverarbeitungselektronik 4 in der Signalverstarkung, im Passverhalten des Filters, in der Schwelle und in der Integrationszeit des Integrators zur Signalgewinnung programmiert.

### 2. Einsatz einer Korperschallsensoreinheit als Klopfsensor an der Gegenschneide eines Feldhackslers

Hierzu wird auf Figur 5 verwiesen, welche ein typisches Spannungssignal V uber der Zeit t zeigt, wenn ein Häckselmesser der Häckseltrommel an der Gegenschneide des ortsfesten Messers anschlägt Um solche Signale zu erkennen, wird das ursprungliche Signal des Signalwandlers 2 durch einen Bandpass gefiltert, wobei Frequenzen zwischen 4 und 11 kHz durchgelassen werden. Das Klopfen wird dann durch ein Signal hinter dem Filter 6 oberhalb eines Schwellwerts S₂ erkannt. Wird ein solches Klopfen registriert, wird der Sensor für eine bestimmte Zeit (t₁ bis t₂) nicht weiter ausgewertet, d. h. es wird für diesen Zeitraum die Verstarkung auf 0 eingestellt Diese Zeitdauer kann beispielsweise 9 ms betragen, Dies ist der Zeitraum, in der üblicherweise die Verstellung des Schneidenspalts a im Häcksler erfolgen sollte Auf diese Weise wird eine möglichst kurze Reaktionszeit erreicht Bei einem derartigen Einsatz der Korperschallsensoreinheit genugt es nämlich, auf das erste Klopfsignal zu reagieren. da dieses Klopfsignal durch das am weitesten herausstehenden Messer an der Häckseltrommel erzeugt wird. Es ist dann völlig klar, dass anschließend der Spalt a vergrößert werden muss, Würden in dieser Zeit (da ja regelmaßig das am weitesten herausstehende Messer die Gegenschneide berührt) periodisch weitere Klopfsignale erzeugt, mussten diese zwangslaufig innerhalb der Vorverarbeitungselektronik verarbeitet werden, was zu einer hoheren Arbeitsbelastung der Elektronik führt. Durch das Ausblenden der dem ersten Klopfsignal nachfolgenden Signale kann somit die Reaktionszeit beschleunigt werden Bei diesem Ausführungsbeispiel wird folglich die Vorverarbeitungselektronik der Korperschallsensoreinheiten im Passverhalten des Filters 6 und in der Schwelle (festgelegt durch den Integrator 7. der hier nur als Schwellenwert wirkt) zur Signalgewinnung programmiert Der Signalverstarker 5 wird lediglich zwischen zwei Werten 0 oder 1 hin- und hergeschaltet Die gleiche Auswertung mit veränderten Schwellenwerten und Verstärkungen kann beispielsweise auch für die Erkennung von Steinen in Erntemaschinen verwendet werden.

### 3 Einsatz einer Körperschallsensoreinheit zur Lagerüberwachung bzw. Wellenüberwachung:

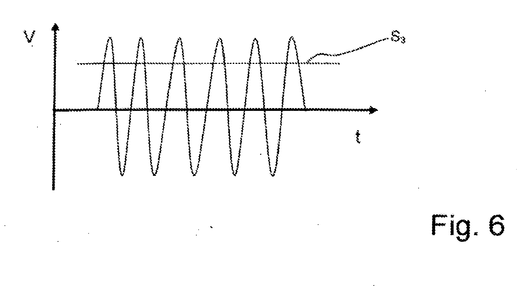

Hierbei wird das Signal des Sensors auf eine bestimmte Frequenz uberwacht Dazu wird der programmierbare Digitalfilter 6 so eingestellt, dass er als Bandpassfilter wirkt, der genau eine Frequenz bzw Frequenzen aus einem sehr schmalen Fenster ausfiltert. Liegt ein Signal mit dieser Frequenz vor und übersteigt dieses eine Schwelle S₃, wird ein Signal S'_{E} an die Auswerteeinrichtung 20 gesendet. Die Schwelle S₃ kann wieder in der Integratoreinrichtung eingestellt werden. Diese Einstellung ist in Figur 6 dargestellt, wobei hier ein gleichmäßig auftretendes Spannungssignal V einer genau definierten Frequenz uber der Zeit t und der eingestellte Schwellwert S₃ gezeigt werden

Für diesen Einsatzzweck wird folglich die Vorverarbeitungselektronik 4 in der Körperschallsensoreinheit 1, 1' hinsichtlich des Passverhaltens des digitalen Filters und evtl, in einer Schwelle S₃ zur Signalgewinnung programmiert Der Signalverstarker 5 kann dabei auf einen festen Verstarkunsswert programmiert sein

Diese Sensoreinstellung lässt sich auch fur verschiedene andere Zwecke verwenden. Fehlt beispielsweise ein Messer an der Hackseltrommel eines Mahdreschers, taucht im Frequenzband bei bekannter Drehzahl eine bekannte Schwingung mit bekannter Frequenz der Häckseltrommel auf. Es kann folglich ein entsprechender Sensor an geeigneter Stelle angebracht und so programmiert werden, dass er genau diese Frequenz detektiert Tritt ein Signal mit dieser Frequenz auf, wird ein entsprechendes Warnsignal an den Bediener des Mahdreschers ausgegeben Ein weiteres Beispiel ist die Beschadigung eines Kugellagers bzw eine fehlende oder beschadigte Kugel in einem Kugellager Auch hier lassen sich die Geräusche mittels eines entsprechend programmierten Sensors anhand einer bestimmten Frequenz bei bekannter Drehzahl der Welle erkennen. Die digital programmierbare Auswertung, d h insbesondere der digitale Filter 6 der Sensoreinheit 1, 1', wird dabei auf eine bestimmte Frequenz programmiert, wobei jederzeit eine Umprogrammierung erfolgen kann, wenn sich beispielsweise die Drehzahl des zu uberwachenden Gerats ändert

Weiterhin können die Sensorsignale auf eine bestimmte Signalflanke bzw eine bestimmte Signalform oder eine andere Signalgröße hin ausgewertet werden. Stimmt eine ermittelte Signalform bzw, Signalflanke mit einer bestimmten vorprogrammierten Signalflanke, Signalform bzw weiteren Signalgroße uberein, wird ein Signal fur die nachfolgende Auswerteeinrichtung 20, d. h. die Steuereinrichtung 20, generiert, welches dann dieses Signal weiterverarbeiten kann und/oder direkt an die zuständigen Module bzw. eine Anzeigeeinrichtung weiterleitet

Wie bereits oben erwähnt, weist die Vorverarbeitungselektronik 4 auch einen Signalgeber 8 auf. Dieser ist mittels von der Steuereinrichtung 20 ausgegebener Testsignale T aktivierbar Auf diese Weise kann von der Steuereinrichtung 20 eine Körperschallsensoreinheit 1.1' kalibriert werden Hierzu weist die Steuereinrichtung 20 eine Kalibriereinheit 27 auf, welche eine Testsignalgenerierungseinheit 28 zur Erzeugung des Testsignals T und eine Testsignalauswerteeinheit 29 zur Auswertung eines in. Reaktion auf das Testsignal T ermittelten Sensorsignals S_{E}^{T} umfasst.

Das Kalibrierungsverfahren lauft so ab. dass zunächst das Testsignal T an eine erste Korperschallsensoreinheit 1 ausgesendet wird. Der dortige Signalgeber 8 erzeugt ein mechanisches Testsignal innerhalb eines Impulsaufnehmers 13. welches von einer weiteren Körperschallsensoreinheit 1', die am gleichen impulsaufnehmer 13 angekoppelt ist, wieder erfasst und in ein entsprechendes elektrisches Sensorsignal umgewandelt wird Dieses Sensorsignal wird dann entsprechend der Einstellung der Vorverarbeitungselektronik 4 vorverarbeitet und als vorverarbeitetes Sensorsignal S_{E}^{T} an die Steuereinheit 20 zurückubermittelt Innerhalb der Testsignalauswerteeinheit 29 wird das empfangene Signal S_{E}^{T} geprüft und es werden dann ggf, geanderte Konfigurationsdaten K an die betreffende Körperschallsensoreintheit 1' gesendet, um diese passend zu kalibrieren Auf diese Weise kann ohne Einsatz zusätzlicher Bauelemente eine gegenseitige Kalibrierung aller Korperschallsensoreinheiten 1,1' erfolgen, wobei vollstandige Funktionstests und sogar Frequenzgangsermittlungen durchgeführt werden konnen

Mit Hilfe der Erfindung kann also dieselbe Sensorhardware zur Sensierung verschiedenster Parameter eingesetzt werden Dies fuhrt zu einer drastischen Reduzierung der Entwicklungs- und Lagerhaltungskosten und zu einer erheblichen Reduzierung von Reparaturzeiten

Es wird abschließend noch einmal darauf hingewiesen, dass es sich bei den In den Figuren dargestellten Maschinen, Sensorsystemen und den beschriebenen Einstellungen lediglich um bevorzugte Ausführungsbeispiele handelt, welche vom Fachmann in vielfacher Hinsicht variiert werden konnen, ohne den Rahmen der Erfindung zu verlassen. So muss die Steuereinrichtung nicht zwangsläufig komplett in einem einzelnen Gehause untergebracht sein, sondern die Komponenten der Steuereinrichtung können auch innerhalb einer Maschine verteilt angeordnet sein Insbesondere konnen auch Komponenten von anderen Steuereinrichtungen mitbenutzt werden oder die Steuereinrichtung ist selbst Bestandteil einer übergeordneten zentralen Steuerung, welche gleichzeitig auch dazu dient, andere Komponenten der Maschine, beispielsweise verschiedenste Arbeitsaggregate, zu steuern. Die Steuereinrichtung kann dabei auch aus einem Prozessor bzw einem Kleincomputer bestehen, wobei die einzelnen Bestandteile wie die Auswerteeinrichtung, die Konfigurationseinrichtung oder die Kalibriereinheit in Form von Softwarekomponenten auf dem Prozessor bzw in der Rechnereinrichtung realisiert sind.

Es wird außerdem der Vollstandigkeit halber darauf hingewiesen, dass die Verwendung der unbestimmten Artikel "ein" bzw "eine" nicht ausschließt dass die betreffenden Merkmale auch mehrfach vorhanden sein können

### Bezugszeichenliste

- 1: Korperschallsensoreinheit
- 1': Korperschallsensoreinheit
- 2: Signalwandler
- 3: Gehause
- 4: Vorverarbeitungselektronik
- 5: Verstärker
- 6: Digitalfilter
- 7: Integrator
- 8: Signalgeber
- 9: Programmierschnittsteile
- 10: Signalausgang
- 11: Dateneingang
- 12: Signalkabel
- 13: Impulsaufnehmer
- 14: Schraube
- 20: Steuereinrichtung
- 21: Ein-/Ausgang
- 22: Ein-/Ausgang
- 23: Signalausgang
- 24: Auswerteeinrichtung
- 25: Konfigurationseinrichtung
- 26: Speicher
- 27: Kalibrierungseinrichtung
- 28: Testsignal-Generierungseinheit
- 29: Testsignal-Auswerteeinheit
- 30: Sensorsystem
- 31: Datenbus
- 100: Mähdrescher
- 101: Mäheinrichtung
- 102: Einzugskanal
- 103: Querflussdreschwerk
- 104: Vorbeschleunigertrommel
- 105: Dreschtrommel
- 106: Wendetrommel
- 107: Dreschkorb
- 108: Hordenschüttler
- 109: Zufuhrboden
- 110: Zufuhrboden
- 111: Sieb
- 112: Sieb
- 113: Gebläse
- 114: Auffang- und Führungsboden
- 115: Auffang- und Führungsboden
- 116: Elevator
- 117: Überkehrelevator
- 118: Korntank
- 119: Tankentleerförderer
- 120: Maschinenende
- 121: Impulsaufnehmer
- 122: Impulsaufnehmer
- 200: Feldhacksler
- 201: Pick-Up-Vorsatzgerät
- 202: ortsfestes Einzugwalzen
- 203: Presswalzen
- 204: Auswurfschacht
- 205: Nachbeschleunigertromme
- 206: Hackseltrommel
- 207: Auswurfkrummer
- 208: Messer
- 209: Messer
- 210: Verstellmechanismus
- 211: Messerhalterung
- 212: Fahrerkabine
- 213: Bedienerterminal
- a: Schneidenspalt
- K: Konfigurationsdaten
- KDS: Konfigurationsdatensatz
- S_{M}: mechanisches Sensorsignal
- S_{E}: elektrisches Sensorsignal
- S'_{E}: vorverarbeitetes Sensorsignal
- S_{E}: Sensorsignal
- S₁: Schwellwert
- S₂: Schwellwert
- S₃: Schwellwert.
- T: Testsignal
- t: Zelt
- t₁: Zeitpunkt
- t₂: Zeitpunkt
- t₃: Zeitpunkt
- V: Spannung

## Patentansprüche

1. Körperachellsensoreinheit (1, 1'), insbesondere für eine Landmaschine (100, 200), mit einem Signalwandler (2), welcher ein mechanisches Sensorsignal (S_{M}) in ein elektrisches Sensorsignal (S_{E}) umwandelt,
und mit einer mit dem Signalwandler (2) verbundenen Vorverarbeltungselektronlk (4),
**dadurch gekennzeichnet,**
**dass** die Vorverarbaltungselektronik (4) eine programmlerbare Funktionskomponente (5, 6, 7, 8) umfasst,
und **dass** die Vorverarbeitungselektronik einen Dateneingang (11) zum Empfang von Konfigurationsdaten (K) und eine Programmierschnittstelle (9) umfasst, um die Funktionskomponente (5, 6, 7, 8) der Vorverarbeitungselektronik (4) auf Basis der empfangenen Konfigurationsdaten (K) zu konfigurieren und wobei eine Sensiercharaktertstik der Körperschallsensorelnheit (1,1') mittels einer Softwareansteuerung für verschiedene sensorische Einsätze änderbar ist und wobei
die sensorischen Einsätze einen Einsatz als
a. Kornverlustsensor oder
b. als Vibrationssensor zur Überwachung eines Lagerspiels und/oder eines Abstands zwischen relativ zueinander beweglichen Bauteilen oder
c. als Unwuchtmelder oder
d. als Fremdkörperdetektor umfassen.

2. Körperschallsensoreinheit nach Anspruch 1, **dadurch gekennzeichnet, dass** die Funktionskomponente (6) der Vorverarbeitungselektronik (4) einen programmierbaren Digitalfilter (6) umfasst.

3. Körperschallsensoreinheit nach Anspruch 1 oder 2, **dadurch gekennzeichnet, dass** die Funktionskomponente (5) der Vorverarbeltungselektronik (4) einen programmierbaren Verstärkter (5) umfasst.

4. Körperschailsensoreinheit nach einem der Ansprüche 1 bis 3, **dadurch gekennzeichnet, dass** die Funktionskomponente (7) der Vorverarbeitungselektronik (4) eine programmierbare Integratoreinrichtung (7) umfasst.

5. Körperschallsensoreinhelt nach einem der Ansprüche 1 bis 4, **dadurch gekennzeichnet, dass** der Signalwandler (2) mechanisch an einen Impulsaufnehmer (14) so gekoppelt ist, dass bei einem Auftreffen von Teilchen in dem Impulsaufnehmer (14) erzeugte Schwingungen vom Signalwandler (2) in elektrische Sensorsignale (S_{E}) umgewandelt werden.

6. Körperschallsensorelnheit nach einem der Ansprüche 1 bis 5, **dadurch gekennzeichnet, dass** der Dateneingang (11) so ausgebildet ist, dass er die Korifigurationsdaten (K) über eine Signalleitung (12) zum Aussenden der vorverarbeiteten elektrischen Sensorsignals (S'_{E}) empfängt.

7. Körperschalisensoreinheit (1, 1') nach einem der Ansprüche 1 bis 6,
**dadurch gekennzeichnet;**
**dass** sie eine Steuereinrichtung (20) mit
a. einer Konfigurationseinrichtung (25) zur Ermittlung von Konfigurationsdaten (K) zur Konfiguration einer programmierbaren Funktionskomponente (5, 6, 7) einer Vorverarbeitungselektronik (4) der Körperschallsensoreinheit (1, 1') und
b. einem Datenausgang (22), um die Konfigurationsdaten (K) an die Körperechalleensoreinheit (1, 1') zu senden
umfasst.

8. Körperschallsensoreinheit (1, 1') nach Anspruch 7, **dadurch gekennzeichnet,**
**dass** die Steuereinrichtung (20)
a.) einen Signaleingang (21) zum Empfang von Sensorsignalen (S'_{E}),
b. eine Auswerteeinrichtung (24) zur Auswertung von empfangenen Sensorsignalen (S'_{E}) und
c.) einen Signalausgang (23) zur Aussendung eines Steuer- und/oder Informationsslgnals in Abhängigkeit von einem ausgewerteten Sensorsignal (S'_{E})
umfasst.

9. Körperschallsensoreinheit (1,1') nach Anspruch 7 oder 8,
**dadurch gekennzeichnet,**
**dass** die Steuereinrichtung (20) zur Steuerung mehrerer Körperschallsensoreinheiten (1, 1') ausgebildet ist.

10. Körperschallsensoreinheit (1, 1') nach Anspruch 9,
**dadurch gekennzeichnet,**
**dass** die Steuereinrichtung (20) und/oder die Vorverarbeitungselektronik (4) der Körperschallsensoreinheit (1,1') eine Speichereinrichtung (26) umfassen, In der eine Anzahl von Konfigurationsdatensätzen (KDS) für eine Konfiguration der Funktionskomponente (5, 6, 7) der Vorauswerteelekronik (4) hinterlegt ist.

11. Körperschallsensoreinhelt (1, 1') nach Anspruch 10,
**dadurch gekennzeichnet,**
**dass** die Konfigurationsdatensätze (KDS) verschiedenen sensorischen Einsätzen der Körperschallsensoreinhelt(en) (1, 1') zugeordnet sind.

12. Körperschallsensoreinheit (1, 1') nach einem der Ansprüche 9 bis 11,
**dadurch gekennzeichnet,**
**dass** mehrere Körperschallsensoreinheiten (1, 1') an eine Steuereinrichtung (20) abgeschossen sind.

13. Verfahren zur Steuerung einer Körperschallsensoreinheit (1, 1'), insbesondere für eine Landmaschine (100, 200), welches einen Signalwandler (2), der ein mechanisches Sensorsignal (S_{M}) in ein elektrisches Sensorsignal (S_{E}) umwandelt, und eine mit dem Signalwandler (2) verbundene Vorverarbeitungselektronik (4) umfasst, wobei ein vom Signalwandler (2) kommendes Sensorsignal (S_{E}) in der Vorvererbeitungselektronik (4) vorverarbeitet, an eine Steuereinrichtung (20) übermittelt und dort aufgewertet wird
**dadurch gekennzeichnet,**
**dass** eine Sensiercharakteristik der Körperschallsensoreinhelt (1, 1') mittels einer Softwareansteuerung für verschiedene sensorische Einsätze änderbar ist und wobei die verschiedenen sensorische Einsätze einen Einsatz als
a. Kornverlustsensor oder
b. als Vibrationssensor zur Überwachung eines Lagerspiels und/oder eines Abstands zwischen relativ zueinander beweglichen Bauteilen oder
c. als Unwuchtmolder oder
d. als Fremdkörperdetektor
umfassen,

14. Verfahren nach Anspruch 13,
**dadurch gekennzeichnet,**
**dass** eine Senslercharakteristik hinsichtlich einer Signalfrequenz und/oder eines charakteristischen Frequenzverlaufs und/oder einer Signalamplitude veränderbar ist.

15. Verfahren nach einem der Ansprüche 13 bis 14,
**dadurch gekennzeichnet,**
**dass** zur Änderung der Sensiercharakteristlk ein Digitalfilter (6) und/oder eine Verstärkereinrichtung (5) und/oder eine Integratoreinrichtung (7) der Vorverarbeltungselektronik (4) konfiguriert werden.

## Claims

1. A structure-borne sound sensor unit (1, 1'), in particular for an agricultural machine (100, 200), comprising a signal transducer (2) which converts a mechanical sensor signal (S_{M}) into an electrical sensor signal (S_{E}), and
an electronic pre-processing system (4) connected to the signal transducer (2),
**characterised in that**
the electronic pre-processing system (4) includes a programmable function component (5, 6, 7, 8), and
the electronic pre-processing system includes a data input (11) for receiving configuration data (K) and a programming interface (9) for configuring the function component (5, 6, 7, 8) of the electronic pre-processing system (4) on the basis of the received configuration data (K), and wherein a sensor characteristic of the structure-borne sound sensor unit (1, 1') can be modified by means of software control for various sensor uses, and wherein
the sensor uses include a use as
a. a grain loss sensor or
b. as a vibration sensor for monitoring bearing play and/or a spacing between components which are movable relative to each other or
c. as an unbalance signalling device or
d. as a foreign body detector.

2. A structure-borne sound sensor unit according to claim 1 **characterised in that** the function component (6) of the electronic pre-processing system (4) includes a programmable digital filter (6).

3. A structure-borne sound sensor unit according to claim 1 or claim 2 **characterised in that** the function component (5) of the electronic pre-processing system (4) includes a programmable amplifier (5).

4. A structure-borne sound sensor unit according to one of claims 1 to 3 **characterised in that** the function component (7) of the electronic pre-processing system (4) includes a programmable integrator device (7).

5. A structure-borne sound sensor unit according to one of claims 1 to 4 **characterised in that** the signal transducer (2) is mechanically coupled to a pulse pickup (14) in such a way that upon impact of particles oscillations produced in the pulse pickup (14) are converted by the signal transducer (2) into electrical sensor signals (S_{E}).

6. A structure-borne sound sensor unit according to one of claims 1 to 5 **characterised in that** the data input (11) is such that it receives the configuration data (K) by way of a signal line (12) for emitting the pre-processed electrical sensor signals (S'_{E}).

7. A structure-borne sound sensor unit (1, 1') according to one of claims 1 to 6 **characterised in that**
it includes a control device (20) with
a. a configuration device (25) for determining configuration data (K) for configuring a programmable function component (5, 6, 7) of an electronic pre-processing system (4) of the structure-borne sound sensor unit (1, 1'), and
b. a data output (22) for sending the configuration data (K) to the structure-borne sound sensor unit (1, 1').

8. A structure-borne sound sensor unit (1, 1') according to claim 7 **characterised in that** the control device (20) includes
a) a signal input (21) for receiving sensor signals (S'_{E}),
b) an evaluation device (24) for evaluating received sensor signals (S'_{E}) and
c) a signal output (23) for emitting a control and/or information signal in dependence on an evaluated sensor signal (S'_{E}).

9. A structure-borne sound sensor unit (1, 1') according to claim 7 or claim 8 **characterised in that** the control device (20) is adapted to control a plurality of structure-borne sound sensor units (1, 1').

10. A structure-borne sound sensor unit (1, 1') according to claim 9 **characterised in that** the control device (20) and/or the electronic pre-processing system (4) of the structure-borne sound sensor unit (1, 1') include a memory device (26) in which a number of configuration data sets (KDS) for a configuration of the function component (5, 6, 7) of the electronic pre-processing system (4) is stored.

11. A structure-borne sound sensor unit (1, 1') according to claim 10 **characterised in that** the configuration data sets (KDS) are associated with various sensor uses of the structure-borne sound sensor unit or units (1, 1').

12. A structure-borne sound sensor unit (1, 1') according to one of claims 9 to 11 **characterised in that** a plurality of structure-borne sound sensor units (1, 1') are connected to a control device (20).

13. A method of controlling a structure-borne sound sensor unit (1, 1'), in particular for an agricultural machine (100, 200), which includes a signal transducer (2) which converts a mechanical sensor signal (S_{M}) into an electrical sensor signal (S_{E}), and an electronic pre-processing system (4) connected to the signal transducer (2), wherein a sensor signal (S_{E}) from the signal transducer (2) is pre-processed in the electronic pre-processing system (4), communicated to a control device (20) and evaluated there,
**characterised in that**
a sensor characteristic of the structure-borne sound sensor unit (1, 1') can be modified by means of a software control for various sensor uses and wherein the various sensor uses include a use as
a. a grain loss sensor or
b. as a vibration sensor for monitoring bearing play and/or a spacing between components which are movable relative to each other or
c. as an unbalance signalling device or
d. as a foreign body detector.

14. A method according to claim 13 **characterised in that** a sensor characteristic in respect of a signal frequency and/or a characteristic frequency curve and/or a signal amplitude can be modified.

15. A method according to one of claims 13 and 14 **characterised in that** for modifying the sensor characteristic a digital filter (6) and/or an amplifier device (5) and/or an integrator device (7) of the electronic pre-processing system (4) are configured.

## Revendications

1. Module senseur de bruit solidien (1, 1'), en particulier pour une machine agricole (100, 200), comprenant un convertisseur de signaux (2) qui convertit un signal mécanique de senseur (S_{M}) en un signal électrique de senseur (S_{E}), et comprenant une électronique de prétraitement (4) reliée au convertisseur de signaux (2), **caractérisé en ce que** l'électronique de prétraitement (4) comprend un composant fonctionnel programmable (5, 6, 7, 8), et **en ce que** l'électronique de prétraitement comprend une entrée de données (11) pour recevoir des données de configuration (K) et une interface de programmation (9) pour configurer le composant fonctionnel (5, 6, 7, 8) de l'électronique de prétraitement (4) sur la base des données de configuration reçues (K), et une caractéristique de détection du module senseur de bruit solidien (1, 1') étant modifiable au moyen d'une commande de logiciel en fonction de divers usages de détection, et les usages de détection englobant des usages de
a. senseur de perte de grain ou de
b. senseur de vibrations pour surveiller un jeu de palier et/ou un écartement entre des éléments structurels mobiles l'un par rapport à l'autre, ou de
c. avertisseur de balourd ou de
d. détecteur de corps étrangers.

2. Module senseur de bruit solidien selon la revendication 1, **caractérisé en ce que** le composant fonctionnel (6) de l'électronique de prétraitement (4) comprend un filtre numérique programmable (6).

3. Module senseur de bruit solidien selon la revendication 1 ou 2, **caractérisé en ce que** le composant fonctionnel (5) de l'électronique de prétraitement (4) comprend un amplificateur programmable (5).

4. Module senseur de bruit solidien selon une des revendications 1 à 3, **caractérisé en ce que** le composant fonctionnel (7) de l'électronique de prétraitement (4) comprend un dispositif intégrateur programmable (7).

5. Module senseur de bruit solidien selon une des revendications 1 à 4, **caractérisé en ce que** le convertisseur de signaux (2) est couplé mécaniquement à un enregistreur d'impulsions (14), de façon que les vibrations produites dans l'enregistreur d'impulsions (14) lors de l'impact de particules soient converties par le convertisseur de signaux (2) en signaux électriques de senseur (S_{E}).

6. Module senseur de bruit solidien selon une des revendications 1 à 5, **caractérisé en ce que** l'entrée de données (11) est conçue de façon à recevoir les données de configuration (K) par l'intermédiaire d'une ligne de signaux (12) servant à émettre les signaux électriques de senseur prétraités (S'_{E}).

7. Module senseur de bruit solidien (1, 1') selon une des revendications 1 à 6, **caractérisé en ce qu'**il comprend un dispositif de commande (20) avec
a. un dispositif de configuration (25) pour définir des données de configuration (K) servant à configurer un composant fonctionnel programmable (5, 6, 7) d'une électronique de prétraitement (4) du module senseur de bruit solidien (1, 1') et
b. une sortie de données (22) pour envoyer des données de configuration (K) au module senseur de bruit solidien (1, 1').

8. Module senseur de bruit solidien (1, 1') selon la revendication 7, **caractérisé en ce que** le dispositif de commande (20) comprend
a.) une entrée de signaux (21) pour recevoir des signaux de senseur (S'_{E}),
b. un dispositif d'analyse (24) pour analyser des signaux de senseur reçus (S'_{E}) et
c.) une sortie de signaux (23) pour émettre un signal de commande et/ou d'information en fonction d'un signal de senseur analysé (S'_{E}).

9. Module senseur de bruit solidien (1, 1') selon la revendication 7 ou 8, **caractérisé en ce que** le dispositif de commande (20) est conçu pour commander plusieurs modules senseurs de bruit solidien (1, 1').

10. Module senseur de bruit solidien (1, 1') selon la revendication 9, **caractérisé en ce que** le dispositif de commande (20) et/ou l'électronique de prétraitement (4) du module senseur de bruit solidien (1, 1') comprennent un dispositif de mémoire (26) dans lequel est enregistrée une pluralité d'ensembles de données de configuration (KDS) pour configurer le composant fonctionnel (5, 6, 7) de l'électronique de pré-analyse (4).

11. Module senseur de bruit solidien (1, 1') selon la revendication 10, **caractérisé en ce que** les ensembles de données de configuration (KDS) sont associés à divers usages de détection du (des) module(s) senseur(s) de bruit solidien (1, 1').

12. Module senseur de bruit solidien (1, 1') selon une des revendications 9 à 11, **caractérisé en ce que** plusieurs modules senseurs de bruit solidien (1, 1') sont connectés à un dispositif de commande (20).

13. Procédé de commande d'un module senseur de bruit solidien (1, 1'), en particulier pour une machine agricole (100, 200), lequel comprend un convertisseur de signaux (2), qui convertit un signal mécanique de senseur (S_{M}) en un signal électrique de senseur (S_{E}), et une électronique de prétraitement (4) reliée au convertisseur de signaux (2), un signal de senseur (S_{E}) provenant du convertisseur de signaux (2) étant prétraité dans l'électronique de prétraitement (4), étant transmis à un dispositif de commande (20) et y étant analysé, **caractérisé en ce qu'**une caractéristique de détection du module senseur de bruit solidien (1, 1') est modifiable au moyen d'une commande de logiciel en fonction de divers usages de détection, et les divers usages de détection englobant des usages de
a. senseur de perte de grain ou de
b. senseur de vibrations pour surveiller un jeu de palier et/ou un écartement entre des éléments structurels mobiles l'un par rapport à l'autre, ou de
c. avertisseur de balourd ou de
d. détecteur de corps étrangers.

14. Procédé selon la revendication 13, **caractérisé en ce qu'**une caractéristique de détection est modifiable en termes de fréquence de signaux et/ou d'allure caractéristique de fréquence et/ou d'amplitude de signaux.

15. Procédé selon une des revendications 13 à 14, **caractérisé en ce que**, pour modifier la caractéristique de détection, un filtre numérique (6) et/ou un dispositif amplificateur (5) et/ou un dispositif intégrateur (7) de l'électronique de prétraitement (4) sont configurés.
